# EUROPEAN PATENT SPECIFICATION

(11) **EP 2 306 694 B1**
(45) Date of publication and mention of the grant of the patent: **25.12.2019**
(21) Application number: 09807847.0
(22) Date of filing: 04.08.2009
(51) Int. Cl.: H04M 3/42, H04M 19/04

(54) **METHOD, SYSTEM AND APPARATUS FOR CONTROLLING PLAY OF CUSTOMIZED RING BACK TONES**
VERFAHREN, SYSTEM UND VORRICHTUNG ZUR REGELUNG DER WIEDERGABE VON ANGEPASSTEN RÜCKRUFTÖNEN
PROCÉDÉ , SYSTÈME ET APPAREIL POUR COMMANDER LA REPRODUCTION DES TONALITÉS DE RETOUR D'APPEL PERSONNALISÉES

(30) Priority: 22.08.2008 CN 200810210298
(43) Date of publication of application: 06.04.2011
(73) Proprietor: Huawei Technologies Co., Ltd., Longgang District Shenzhen, Guangdong 518129 (CN)
(72) Inventor: YANG, Jian, Shenzhen 518129 (CN); CHEN, Guoqiao, Shenzhen 518129 (CN)
(74) Representative: Isarpatent
(86) International application number: PCT/CN2009/073062
(87) International publication number: WO 2010/020148

(56) References cited:
- EP-A1- 1 686 781
- EP-A1- 1 944 954
- WO-A1-2005/051015
- CN-A- 1 859 488
- CN-A- 1 946 111
- CN-A- 1 988 691
- CN-A- 101 247 559
- US-A1- 2006 109 970
- US-A1- 2007 286 402

## Description

### Field of the Invention

The present invention relates to communication technologies, and in particular, to a method, a system, and an apparatus for controlling play of Customized Ring Back Tones (CRBTs).

### Background of the Invention

The CRBT service enables a user to customize the ring back tone played on the User Equipment (UE) of the user as required. The ring back tone may be music, an advertisement, or a speech recorded by the user. The CRBT service is applicable to all mobile and fixed telephone users.

A Customized Ring Tone (CRT) service enables a user to customize the ring tone played on the UE of the user as required. The ring tone may be music, an advertisement, or a speech recorded by the user.

A Customized Background Tone (CBT) service enables a user to customize a background tone for a call as required by both parties to the call. A background tone may be music, an advertisement, or a speech recorded by the user.

The foregoing CRBT services fall within the audio CRBT category, and can be implemented through the existing audio system after the existing speech system is renovated. The CRBT service is a collective term of the foregoing three services.

A Customized Multimedia Ring back tone (CMR) service is customized by the called party in the videophone service, and provides a colorful and euphonic multimedia video for the calling party in place of the ordinary ring back tone while the called party rings after the calling party originates a call to the called party through a videophone.

The CMR is: After the calling party originates a call to the called party, if the called party has subscribed to the CMR service, the CMR customized by the called party replaces the ring back tone played while the calling party waits for the called party to answer the call. The CMR service may also play the corresponding CRBT file to the calling party according to conditions preset by the called party. For example, different CRBT files are played to different calling parties, or different CRBT files are played in different time segments.

In the CRBT service in the prior art, the called party subscribes to the CRBT service, and the calling party receives and plays the CRBT, and the media are not handed over to the called party until the called party goes off-hook. In the CRT service, the calling party subscribes to the CRT service. In the ringing process, the CRT customized by the calling party is played on the UE of the called party. When the called party goes off-hook, the ring tone stops and the media are connected up between the calling party and the called party normally.

However, these problems have become apparent in the prior art: The CRBT receiving party receives the CRBT passively, and the CRBT is played automatically. However, the CRBT receiving party who perceives the CRBT directly is unable to control the play of the CRBT, which deteriorates the experience of the CRBT receiving party massively.

EP 1 944 954 A1 relates to the multimedia ring back tone (RBT) service, and particularly to a method, system, and apparatus for replicating RBTs, in which the MRS plays an RBT to the client and obtains the Replicate RBT request inputted by the client. The method includes: receiving, by an AS, the Replicate RBT request obtained and sent by the MRS; and sending, by the AS, according to the Replicate RBT request, to the RBT platform a Replicate RBT command, which carries RBT replication information, the Replicate RBT command instructing the RBT platform to replicate the requested RBT to an information library of the client.

EP 1686781A1 relates generally to communication systems and more particularly to ringback tones, in which a calling party initiates a call to a called party. A playback of a ringback tone, preselected by the called party, is performed to the calling party while the calling party waits for the called party to answer the call. The calling party inputs a signal to cause a change to a characteristic of the playback of the ringback tone.

US 2006/109970A1 relates, in general, to a method of changing the ring back tone replacing sound of a called party to the sound source of another supplementary service of a calling party using a dual tone multi-frequency shortcut key during the placing of a call, a method of changing the ring back tone replacing sound or service sound source (title song) of the calling party to the sound source of the supplementary service of the called party, a method of pushing the service sound source of the calling party as the service sound source of the called party in real time during the placing of a call, and apparatuses for performing the methods.

WO 2005/051015A1 relates to a call setup process in a communications network and, more particularly, to a method for fetching a substitute ringback tone which is provided to a calling party until a called party responds to a call during a call setup process, when a calling party feels like selecting the substitute ringback tone of the called party while hearing the substitute tone of the called party, the calling party can easily set the substitute ringback tone of his or her own to be identical with that of the called party. The calling party submits the fetch request just by pressing a predetermined key input sequence, and the system changes the substitute ringback tone of the calling party immediately or after obtaining the confirmation of the calling party. Also, the user can access the system and set the substitute ringback tone to be identical with that of another user or present a substitute ringback tone to a third party.

US 2007/286402 A1 calling party controlled ringback tones. A computer readable medium stores a program for a calling party controlled ringback tone service. The service enables a calling party to control ringback tones, even overriding called party selected ringback tones. The service can operate in a wireless or wireline network. such as a voice over IP (VoIP) network or time division multiplexed (TDM) network. The calling party can be periodically billed for the ringback tone control service, as well as the ringback tones. The subscriber can configure the service via the web.

### Summary of the Invention

The present invention provides a method, a system, and an apparatus for controlling play of CRBTs to improve the experience of the CRBT receiving party, as set out in the appended claims 1 - 11.

According to a first aspect of the present invention a method for controlling play of a CRBT is realized through the following technical solution:
receiving, by a CRBT platform, the play control instruction sent by a User Equipment (UE) carrying a rights identifier, wherein the rights identifier
indicates whether the UE has rights to control CRBT play, and the rights are set by a called party who is called by the UE; judging, by the CRBT platform, whether the identifier indicates that the UE has the rights to control CRBT play; and, sending, by the CRBT platform, the CRBT to the UE according to the play control instruction, if the identifier indicates that the UE has the rights to control CRBT play.

According to the second aspect of the present invention a user equipment (UE) for controlling play of a Customized Ring Back Tone, CRBT, includes: a control instruction sending unit, configured to send a play control instruction to a Customized Ring Back Tone, CRBT, platform, the play control instruction carries a rights identifier, and the rights identifier indicates whether the UE has rights to control CRBT play, wherein the rights are set by a called party who is called by the UE; a CRBT receiving unit, configured to obtain a CRBT sent by the CRBT platform according to the play control instruction, if the identifier indicates that the UE has the rights to control CRBT play..

According to the third aspect of the present invention a customized ring back tone (CRBT) platform includes:
a control instruction receiving unit, configured to receive a play control instruction sent by a User Equipment (UE), wherein the play control instruction sent by the UE carries a rights identifier, and the rights identifier indicates whether the CRBT receiving party has rights to control CRBT play, wherein the rights are set by a called party who is called by the UE; a CRBT sending unit, configured to judge whether the identifier indicates that the UE has the rights to control CRBT play and send the CRBT to the UE according to the play control instruction, if the identifier indicates that the UE has the rights to control CRBT play.

The foregoing technical solution brings these benefits: Through the information interaction between the CRBT receiving party and the CRBT playing party, the CRBT receiving party can control the play of the CRBT, and the user experience of the CRBT receiving party is improved.

### Brief Description of the Drawings

FIG. 1 is a flowchart of a first method embodiment of the present invention;
FIG. 2 is a flowchart of a second method embodiment of the present invention;
FIG. 3 is a flowchart of a third method embodiment of the present invention;
FIG. 4 is a flowchart of a fourth method embodiment of the present invention;
FIG. 5 is a flowchart of a fifth method embodiment of the present invention;
FIG. 6 is a flowchart of a sixth method embodiment of the present invention;
FIG. 7 is a schematic view showing a play control menu in a ninth method embodiment of the present invention;
FIG. 8 is a schematic view showing composition of a system in a tenth embodiment of the present invention;
FIG. 9 is a schematic view showing a structure of a UE in an eleventh embodiment of the present invention;
FIG. 10 is a schematic view showing a structure of a UE in a twelfth embodiment of the present invention;
FIG. 11 is a schematic view showing a structure of a CRBT platform in a thirteenth embodiment of the present invention; and
FIG. 12 is a schematic view showing a structure of a CRBT platform in a fourteenth embodiment of the present invention.

### Detailed Description of the Embodiments

The embodiments of the present invention provide a method for controlling play of a CRBT to improve the user experience of the CRBT receiving party.

### Embodiment 1

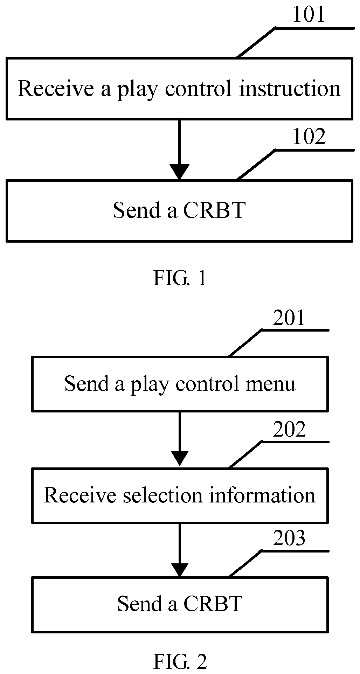

As shown in FIG. 1, a method for controlling play of a CRBT in this embodiment includes the following steps:
Step 101: Receive a play control instruction sent by a UE, where the UE is a CRBT receiving party and may be a calling party or a called party. In the subsequent embodiments, more detailed instances will be given.
   The received play control instruction may be carried through a protocol field or in other modes. For example:
   The play control instruction is carried through different Session Initiation Protocol (SIP) header fields.
   Or the play control instruction is carried through an Extensible Markup Language (XML) document. The XML document may be further carried through a Hyper Text Transfer Protocol (HTTP) field. It is understandable that the play control instruction may be sent in many modes, and the examples of the sending mode above shall not be construed as limitations to the present invention.
Step 102: Send a CRBT to the UE according to the play control instruction.

Through the information interaction between the CRBT receiving party and the CRBT playing party in the foregoing embodiment, the CRBT receiving party can control the play of the CRBT, and the user experience of the CRBT receiving party is improved.

### Embodiment 2

As shown in FIG. 2, the foregoing embodiment may be extended as follows:
Step 201: Send a play control menu to a UE.
   The sending of the play control menu to the UE may be:
   sending the play control menu carried in a Circuit Switched (CS) protocol, or
   sending the play control menu carried in a Packet Switched (PS) protocol.

   The mode of carrying the play control menu in the CS protocol may be:
   carrying the play control menu through the Dual Tone Multi Frequency (DTMF), or Short Message Service (SMS), or Unstructured Supplementary Service Data (USSD), or supplementary service indication message such as a Facility message.
   The mode of carrying the play control menu in the PS protocol may be: carrying the play control menu through HTTP, or SIP, or Simple Object Access Protocol (SOAP). The play control instruction mentioned above in Embodiment 1 may also be carried in the modes enumerated above. The mode of carrying messages is not limited herein. Several of the modes will be detailed in the subsequent embodiments.
Step 202: Receive selection information about the menu item selected by the UE.
Step 203: Send a CRBT to the UE according to the selection information.

The foregoing embodiment provides an alternative method for sending play control information on the basis of Embodiment 1, and simplifies the user operation.

### Embodiment 3

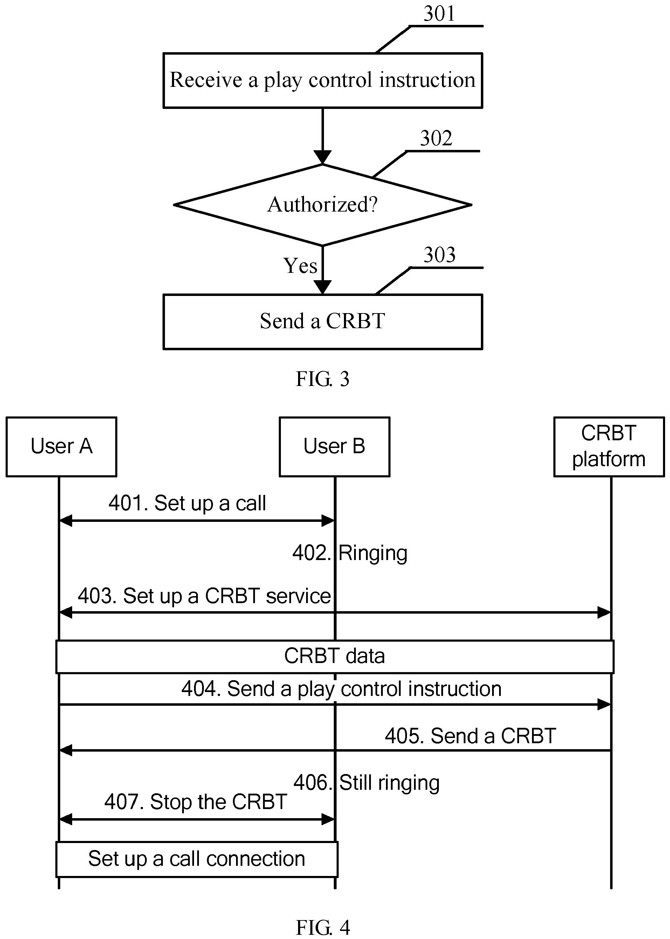

As shown in FIG. 3, an authentication step may be added to the method described in Embodiment 1 to form the method in Embodiment 3:
Step 301: Receive a play control instruction that carries a rights identifier from the UE. The rights identifier indicates whether the UE has the rights to control CRBT play.
Step 302: Judge whether the identifier indicates that the UE has the rights to control CRBT play.
Step 303: Send a CRBT to the UE according to the play control instruction if the identifier indicates that the UE has the rights to control CRBT play.

The authentication step is added to the foregoing embodiment to enhance security.

In the subsequent method embodiments, the conception of the present invention is applied to several existing CRBT scenarios. In the subsequent embodiments, user A (UE A) is a calling party, and user B (UE B) is a called party.

### Embodiment 4

As shown in FIG. 4, in the case that user B has customized a CRBT service or a Customized Alerting Tone (CAT) service, the procedure may be as follows:
Step 401: A call is set up.
Step 402: After the call is set up, user B starts ringing, namely, the called party starts playing the ring tone.
Step 403: A CRBT service is set up. The CRBT connection of user A is set up in this step, and the CRBT data may be transmitted after this step.
Step 404: User A sends a play control instruction to the CRBT platform. The play control instruction may carry a rights identifier.
Step 405: The CRBT platform sends the corresponding CRBT to user A according to the play control instruction in step 404. If the control instruction in step 404 carries a rights identifier, this step needs to include a judgment operation, namely, judging whether user A has the rights to control CRBT play; if user A has the rights to control CRBT play, step 405 is performed; if user A does not have the rights to control CRBT play, the CRBT customized by user B may be played to user A, or beeps are played to user A. In this step, a reason for rejecting play control may be sent to user A, or a rejection identifier is sent to user A to indicate rejection of play control. The rights may be set by user B or specified by the system, which shall not be construed as a limitation to the present invention.
Step 406: User B is still ringing.
Step 407: When user B goes off-hook to answer the call, the CRBT stops, and a call connection is set up. After this step, the call data may be transmitted. Another procedure for stopping the CRBT play is: User A goes on-hook, the CRBT play stops, and the call connection is cut off. The procedure for stopping the CRBT play shall not be construed as a limitation to the present invention.

### Embodiment 5

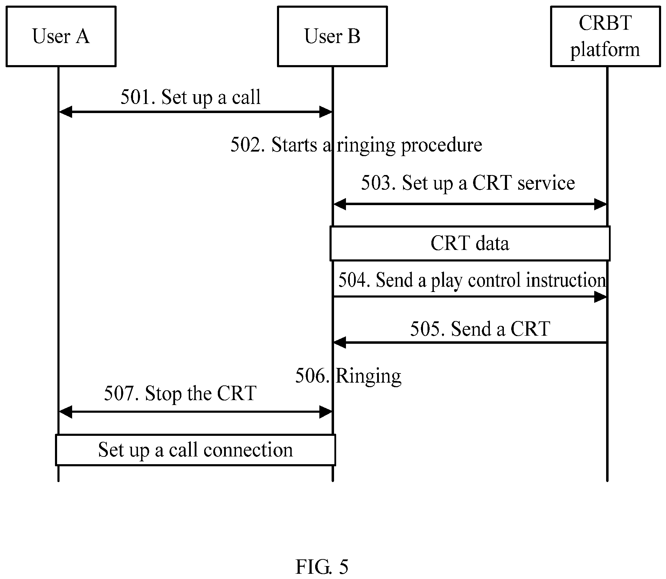

As shown in FIG. 5, in the case that user A has customized a CRT service or a Customized Ringing Signal (CRS) service, the procedure may be as follows:
Step 501: A call is set up.
Step 502: After the call is set up, user B starts a ringing procedure, namely, the called party starts a ringing procedure.
Step 503: A CRT service is set up. The CRT connection of user B is set up in this step, and the CRT data may be transmitted after this step.
Step 504: User B sends a play control instruction to the CRBT platform. The play control instruction may carry a rights identifier.
Step 505: The CRBT platform sends the corresponding CRT to user B according to the play control instruction in step 504. If the control instruction in step 503 carries a rights identifier, this step needs to include a judgment operation, namely, judging whether user B has the rights to control CRT play; if user B has the rights to control CRT play, step 505 is performed; if user B does not have the rights to control CRT play, the CRT customized by user A may be played to user B, or beeps are played to user B. In this step, a reason for rejecting play control may be sent to user B, or a rejection identifier is sent to user B to indicate rejection of play control. The rights may be set by user A or specified by the system, which shall not be construed as a limitation to the present invention.
Step 506: User B is ringing.
Step 507: When user B goes off-hook to answer the call, the CRT stops, and a call connection is set up. After this step, the call data may be transmitted. Another procedure for stopping the CRT play is: User A goes on-hook, the CRT play stops, and the call connection is cut off. The procedure for stopping the CRT play shall not be construed as a limitation to the present invention.

### Embodiment 6

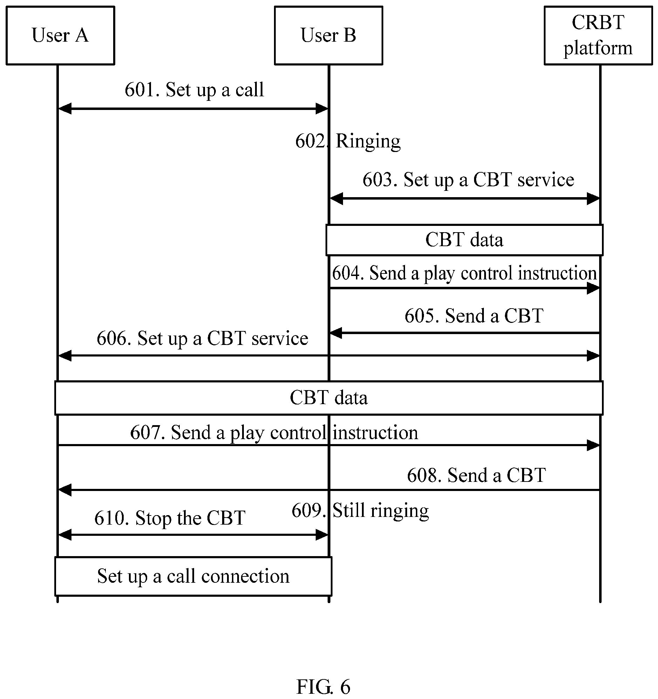

As shown in FIG. 6, in the case that user A and/or user B has customized a CBT service (in this embodiment, both user A and user B have customized a CBT service), the procedure may be as follows:
Step 601: A call is set up.
Step 602: After the call is set up, user B starts ringing, namely, the called party starts playing the ring tone.
Step 603: A CBT service is set up. The CBT connection of user B is set up in this step, and the CBT data may be transmitted after this step.
Step 604: User B sends a play control instruction to the CRBT platform. The play control instruction may carry a rights identifier.
Step 605: The CRBT platform sends the corresponding CBT to user B according to the play control instruction in step 604; if the control instruction sent in step 604 carries a rights identifier, this step needs to include a judgment operation, namely, judging whether user B has the rights to control CBT play. If user B has the rights to control CBT play, step 605 described above is performed.
Step 606: A CBT service is set up. The CBT connection of user A is set up in this step, and the CBT data may be transmitted after this step.
Step 607: User A sends a play control instruction to the CRBT platform. The play control instruction may carry a rights identifier.
Step 608: The CRBT platform sends the corresponding CBT to user A according to the play control instruction in step 607; if the control instruction sent in step 607 carries a rights identifier, this step needs to include a judgment operation, namely, judging whether user A has the rights to control CBT play. If user A has the rights to control CBT play, step 608 described above is performed.
Steps 603-605 are independent of steps 606-608, and no fixed logical sequence exists, that is steps 603-605 may be performed before or after steps 606-608, and may also be performed at the same time as steps 606-608.
Step 609: User B is still ringing.
Step 610: When user B goes off-hook to answer the call, the CBT stops, and a call connection is set up. After this step, the call data may be transmitted. Another procedure for stopping the CBT play is: User A goes on-hook, the CBT play stops, and the call connection is cut off. The procedure for stopping the CBT play shall not be construed as a limitation to the present invention.

The embodiments from Embodiment 4 to Embodiment 6 describe several scenarios. Through the information interaction between the CRBT receiving party and the CRBT playing party, the CRBT receiving party can control the play of the CRBT, and the user experience of the CRBT receiving party is improved.

### Embodiment 7

This embodiment provides the format of the play control instruction mentioned in the foregoing embodiments, and the format of the response to the play control instruction:
Table 1 shows the message format of a play control instruction:

**Table 1 Play control instruction**

| **Field** | **Description** | **Value** | **Remarks** |
|---|---|---|---|
| SQNO | Sequence number | 1 to 127; | This field indicates an interaction. |
| | | This field is optional. | |
| Optiontype | Operation code | 1: play; 2: pause; 3: stop; 4: next; 5: previous; 6: last; 7: first; 8: volume up; 9; volume down; 10: full screen of video; 11: minimized screen of video; 12: pause video; 13: close video; 14: close audio; 15: play video; 16: play audio; 17: close text information; 18: play text information. | The UE operation may be sent to the server through an operation code, and the server resolves the operation code to understand the operation instruction of the user and exercise media control. |
| | | This field is generally required. | |
| UserID | User identifier | A telephone number or information that represents the UE ID. | This field indicates the ID of the message sender, and may be a telephone number, a SIP URI, an email address, or other information that represents the user ID. |
| | | This field is optional. | |
| Parameter | Parameter data | Parameter data structure, for example, Full, Maximum, Minimum, 50%. | Parameter information indicative of the corresponding operation type. For example, if the operation type is "play", the value "Full" of this parameter indicates full-screen play; if the operation type is "play audio", the value "50%" of this parameter indicates that the volume is 50%. |
| | | This field is optional. | |

Table 2 shows the format of a response message returned by a CRBT platform in response to the play control instruction

**Table 2 Response message**

| **Field** | **Description** | **Value** | **Remarks** |
|---|---|---|---|
| SQNO | Sequence number | 1 to 127; | This field indicates an interaction. |
| | | This field is optional. | |
| Status | Instruction status | OK: successful acceptance; NO: not acceptable. | This field indicates whether the control instruction information is acceptable. |
| | | This field is generally required. | |
| Reason | Reason | If the value of "Status" is NO, the reason may be specified. | This field indicates the reason for rejection. |
| | | This field is optional. | |

It is understandable that, the field names and the corresponding operations in the foregoing tables shall not be construed as limitations to the present invention. For example, the sequence number of the operation code in Table 1, the corresponding operation and its sequence may be arranged in other ways.

The foregoing embodiments give examples of the format of the play control instruction and the format of the response to the instruction, and the format is applicable to Embodiment 1 to Embodiment 6. Through the information interaction between the CRBT receiving party and the CRBT playing party, the CRBT receiving party can control the play of the CRBT, and the user experience of the CRBT receiving party is improved.

### Embodiment 8

This embodiment provides the modes of transmitting the play control message and its response message described in Embodiment 7, and gives more detailed implementation modes.

The foregoing data messages may be carried through an extended Facility message, namely, through a newly added type or an extended type of the Facility message.

The data messages may be carried through USSD, or SMS, or other call signal.

In an IP Multimedia Subsystem (IMS) or a Next General Network (NGN) or other Public Switched (PS) networks, the data messages may be carried in the following way:
In a SIP network, an extended header field specified in SIP carries the data messages. For example, an extended header field which is extended in the specified method carries the data messages in the call process. The specified method may be a Refer or Notify method. The extended header field may be P-CMR- Optiontype, P-CMR- SQNO, P-CMR- UserID, P-CMR- Parameter, P-CMR- Status, or P-CMR- Reason. Such header fields correspond to the fields of the message defined in Embodiment 7.

In the SIP network, the data messages may be carried through an XML document or through HTTP in the specified method. The document type definition (DTD) of the XML document may be:

```
    <?xml version="1.0" encoding="UTF-8"?>
    <!-- edited with XML -->
    <!ELEMENT CMR-OPTION-Req EMPTY>
    <!ATTLIST CMR-OPTION-Req
        SQNO CDATA #IMPLIED
```

Optiontype (play|pause|stop|next|previous|last|first|volume up|volume down|full screen of video|minimized screen of video|pause video|close video|close audio|play video|play audio|close text information|play text information) #REQUIRED

```
       UserID CDATA #IMPLIED
       Parameter CDATA #IMPLIED
    >
    <!ELEMENT CMR-OPTION-Rep EMPTY>
    <!ATTLIST CMR-OPTION-Rep
        SQNO CDATA #IMPLIED
        Status (Yes | No) #REQUIRED
       Reason CDATA #IMPLIED
    >
```

An instance XML document of this DTD is given below:
The following request message in the current session 11 indicates the user 13900110101 expects to play a video, and the video play starts from 50s.

```
    <?xml version="1.0" encoding="UTF-8"?>
    <!-- edited with XML -->
    <!DOCTYPE CMR-OPTION-Req SYSTEM ".\CMR-OPTION.dtd">
    <!--The request message in the current session 11 indicates the user 13900110101
    expects to play a video, and the video play starts from 50s. -->
    <CMR-OPTION-Req SQNO="11" Optiontype="play video"
    UserID="13900110101" Parameter="50s"/>
```

The following message is a response to the request message whose SQNO is 11, and the response message indicates rejection of the operation because the user is not authorized.

```
    <?xml version="1.0" encoding="UTF-8"?>
    <!-- edited with XML -->
    <!DOCTYPE CMR-OPTION-Rep SYSTEM ".\CMR-OPTION.dtd">
    <!--The following message is a response to the request message whose SQNO is 11,
    and the response message indicates rejection of the operation because the user is not
    authorized-->
    <CMR-OPTION-Rep SQNO="11" Status="No" Reason="unauthorized"/>
```

### Embodiment 9

This embodiment deals with how a CRBT platform sends a play control menu to the CRBT receiving party. It is assumed that the user performs interactive operations on the CRBT platform through DTMF and controls play of media. The CRBT platform may also be another server on the network.

At proper time in the communication process, the server may deliver a play control menu to the user. The play control menu indicates the current interactive operation options to the user. Each option corresponds to a DTMF signal. The user presses a key to trigger the DTMF and implements interactive feedback to the server. The server understands the user operation intention according to the menu currently available to the user and the menu item selected by the user through a DTMF feedback signal, and then the server performs media play control for the user. Alternatively, the play control menu may be transmitted through SMS or USSD.

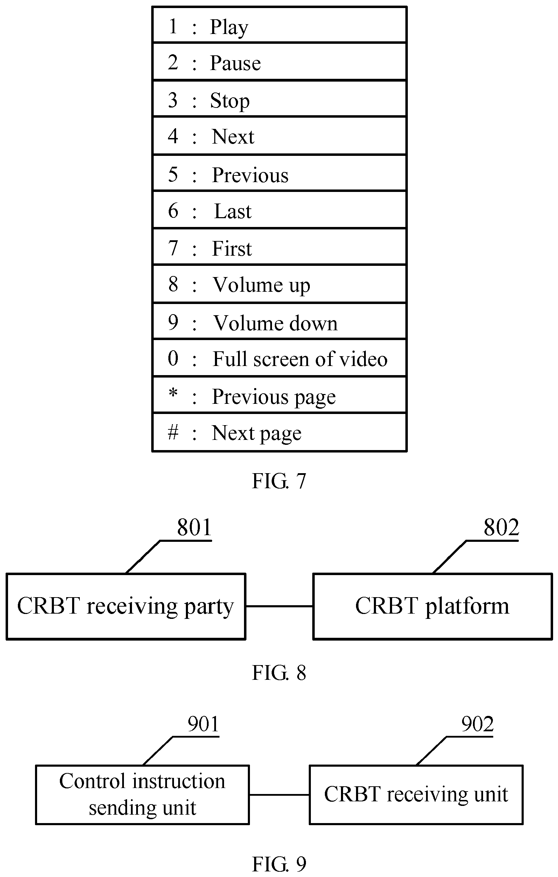

FIG. 7 shows an instance of the play control menu. The user may press a DTMF key such as 0-9, *, and # to perform the operation. The server receives the DTMF signal to know the operation intention of the UE according to the current menu, thus implementing the interaction between the UE and the server. It is understandable that the specific style of the menu shall not be construed as a limitation to the present invention. The number of options and the sequence of the operation items are variable.

The foregoing embodiment expounds the method of sending relevant information. In Embodiment 1 to Embodiment 6, through the information interaction between the CRBT receiving party and the CRBT playing party, the CRBT receiving party can control the play of the CRBT, and the user experience of the CRBT receiving party is improved.

### Embodiment 10

FIG. 8 shows a system for controlling play of a CRBT. The system includes:
a CRBT receiving party 801, configured to send a play control instruction to a CRBT platform 802, and obtain a CRBT sent by the CRBT platform 802 according to the play control instruction; and
the CRBT platform 802, configured to send the CRBT to the CRBT receiving party 801 according to the play control instruction.

When the CRBT platform 802 sends a play control menu to the CRBT receiving party 801, the CRBT receiving party 801 is further configured to receive the play control menu; select an item from the play control menu, and send selection information about the selected item to the CRBT platform 802; and receive the CRBT sent by the CRBT platform 802 according to the selection information; and
the CRBT platform 802 is further configured to send the play control menu to the CRBT receiving party 801; receive the selection information sent by the CRBT receiving party 801, and send a CRBT to the CRBT receiving party 801 according to the selection information.

If the play control instruction carries a rights identifier which indicates whether the CRBT receiving party has the rights to control CRBT play, the CRBT platform 802 is further configured to judge whether the identifier indicates that the CRBT receiving party 801 has the rights to control CRBT play; and, if the identifier indicates that the CRBT receiving party 801 has the rights to control CRBT play, send a CRBT to the CRBT receiving party 801 according to the play control instruction.

### Embodiment 11

As shown in FIG. 9, a UE provided in this embodiment includes:
a control instruction sending unit 901, configured to send a play control instruction to a CRBT platform; and
a CRBT receiving unit 902, configured to obtain a CRBT sent by the CRBT platform according to the play control instruction.

### Embodiment 12

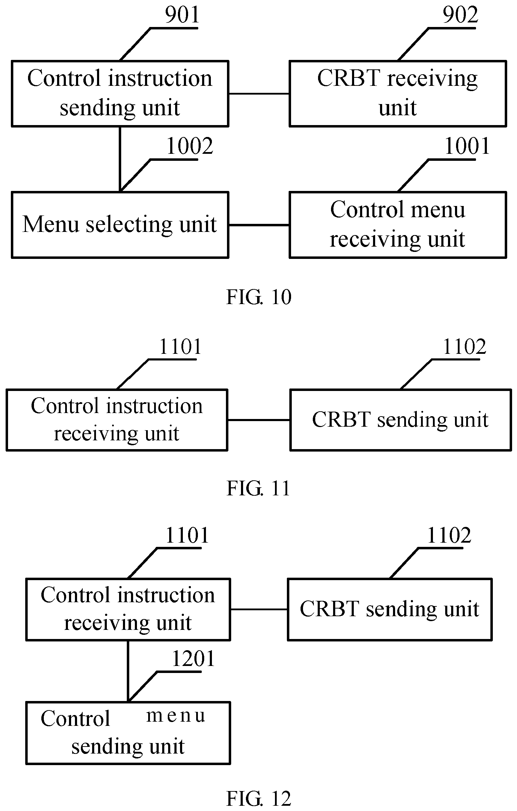

As shown in FIG. 10, the UE provided in Embodiment 11 may further include:
a control menu receiving unit 1001, configured to receive a play control menu;
a menu selecting unit 1002, configured to select an item from the play control menu;
the control instruction sending unit 901, further configured to send selection information about the selected item to the CRBT platform; and
the CRBT receiving unit 902, further configured to receive the CRBT sent by the CRBT platform according to the selection information.

### Embodiment 13

As shown in FIG. 11, a CRBT platform provided in this embodiment includes:
a control instruction receiving unit 1101, configured to receive a play control instruction sent by a CRBT receiving party; and
a CRBT sending unit 1102, configured to send a CRBT according to the play control instruction.

The play control instruction sent by the CRBT receiving party 801 carries a rights identifier.

When the rights identifier indicates whether the CRBT receiving party 801 has the rights to control CRBT play, the CRBT sending unit 1102 is further configured to judge whether the identifier indicates that the CRBT receiving party 801 has the rights to control CRBT play; and, if the CRBT receiving party 801 has the rights to control CRBT play, send a CRBT to the CRBT receiving party 801 according to the play control instruction.

### Embodiment 14

As shown in FIG. 12, the CRBT platform provided in Embodiment 13 may further include:
a control menu sending unit 1201, configured to send a play control menu to the CRBT receiving party 801;
the control instruction receiving unit 1101, further configured to receive selection information about the item selected by the CRBT receiving party 801 among the play control menus; and
the CRBT sending unit 1102, further configured to send the CRBT to the CRBT receiving party 801 according to the selection information.

Through the information interaction between the CRBT receiving party and the CRBT playing party in the foregoing embodiment, the CRBT receiving party can control the play of the CRBT, and the user experience of the CRBT receiving party is improved.

Persons of ordinary skill in the art should understand that all or a part of the steps of the method in the embodiments of the present invention may be implemented by a program instructing relevant hardware. The program may be stored in a computer readable storage medium. The storage medium may be a Read-Only Memory (ROM), a magnetic disk, or a Compact Disk-Read Only Memory (CD-ROM).

Detailed above are a method, a system, and an apparatus for controlling play of CRBTs under the present invention. Although the invention is described through some exemplary embodiments, the invention is not limited to such embodiments.

## Claims

1. A method for controlling play of a Customized Ring Back Tone, CRBT, comprising:
receiving (101), by a CRBT platform (802), a play control instruction sent by a User Equipment, UE, carrying a rights identifier, wherein the rights identifier indicates whether the UE has rights to control CRBT play, and the rights are set by a called party who is called by the UE; and
judging (302), by the CRBT platform (802), whether the identifier indicates that the UE has the rights to control CRBT play; and,
sending (102), by the CRBT platform (802), the CRBT to the UE according to the play control instruction, if the identifier indicates that the UE has the rights to control CRBT play.

2. The method according to claim 1, wherein:
the received play control instruction is carried through a Session Initiation Protocol, SIP, header field; or
the play control instruction is carried through an Extensible Markup Language, XML, document.

3. The method according to claim 2, wherein:
the XML document is carried through a Hyper Text Transfer Protocol, HTTP, field.

4. The method according to claim 1, wherein: before receiving, by the CRBT platform (802), the play control instruction sent by the UE, the method further comprises:
sending (201), by the CRBT platform (802), a play control menu to the UE;
the step of receiving (101), by the CRBT platform (802), the play control instruction sent by the UE comprises: receiving (202), by the CRBT platform (802), selection information about an item selected by the UE from the play control menu; and
the step of sending (102), by the CRBT platform (802), the CRBT to the UE according to the play control instruction comprises: sending (203), by the CRBT platform (802), the CRBT to the UE according to the selection information.

5. The method according to claim 4, wherein the step of sending (201), by the CRBT platform (802), the play control menu is
sending, by the CRBT platform (802), the play control menu carried through a Packet Switched, PS, protocol; or
sending, by the CRBT platform (802), the play control menu carried through a Circuit Switched, CS, protocol.

6. The method according to claim 1, wherein the step of receiving (101), by the CRBT platform (802), the play control instruction is:
sending, by the UE, the play control instruction carried through a Circuit Switched, CS, protocol; or
sending, by the UE, the play control instruction carried through a Packet Switched, PS, protocol.

7. The method according to claim 5 or 6, wherein the carrying through the CS protocol is:
carrying through Dual Tone Multi Frequency, DTMF; or
carrying through Short Message Service, SMS; or
carrying through Unstructured Supplementary Service Data, USSD; or
carrying through a supplementary service indication message;
wherein the carrying through the PS protocol is:
carrying through a Hyper Text Transfer Protocol, HTTP; or
carrying through a Session Initiation Protocol, SIP; or
carrying through a Simple Object Access Protocol, SOAP.

8. A User Equipment, UE, for controlling play of a Customized Ring Back Tone, CRBT, comprising:
a control instruction sending unit (901), configured to send a play control instruction to a Customized Ring Back Tone, CRBT, platform (802), the play control instruction carries a rights identifier, and the rights identifier indicates whether the UE has rights to control CRBT play, wherein the rights are set by a called party who is called by the UE;
a CRBT receiving unit (902), configured to obtain a CRBT sent by the CRBT platform (802) according to the play control instruction, if the identifier indicates that the UE has the rights to control CRBT play.

9. The UE according to claim 8, further comprising:
a control menu receiving unit (1001), configured to receive a play control menu;
a menu selecting unit (1002), configured to select an item from the play control menu;
the control instruction sending unit (901), further configured to send selection information about the selected item to the CRBT platform (802); and
the CRBT receiving unit (902), further configured to receive the CRBT sent by the CRBT platform (802) according to the selection information.

10. A Customized Ring Back Tone, CRBT, platform (802), comprising:
a control instruction receiving unit (1101), configured to receive a play control instruction sent by a User Equipment, UE,, wherein the play control instruction sent by the UE carries a rights identifier, and the rights identifier indicates whether the UE has rights to control CRBT play, wherein the rights are set by a called party who is called by the UE;
a CRBT sending unit (1102), configured to judge whether the identifier indicates that the UE has the rights to control CRBT play and send the CRBT to the UE according to the play control instruction, if the identifier indicates that the UE has the rights to control CRBT play .

11. The CRBT platform according to claim 10, further comprising:
a control menu sending unit (1201), configured to send a play control menu to the UE;
the control instruction receiving unit (1101), further configured to receive selection information about an item selected by the UE from the play control menu; and
the CRBT sending unit (1102), further configured to send the CRBT to the UE according to the selection information.

## Patentansprüche

1. Verfahren zum Regeln der Wiedergabe eines angepassten Rückruftons (CRBT), umfassend:
Empfangen (101), durch eine CRBT-Plattform (802), einer Wiedergaberegelungsanweisung, die durch eine Benutzereinrichtung (UE) gesendet wird und eine Rechtekennung trägt, wobei die Rechtekennung angibt, ob die UE über die rechte verfügt,
die CRBT-Wiedergabe zu regeln, und die Rechte durch einen angerufenen Teilnehmer festleget sind, der durch die UE angerufen wird; und
Beurteilen (302), durch die CRBT-Plattform (802), ob die Kennung angibt, dass die UE über die Rechte verfügt, die CRBT-Wiedergabe zu regeln; und
Senden (102), durch die CRBT-Plattform (802), des CRBT an die UE gemäß der Wiedergaberegelungsanweisung, wenn die Kennung angibt, dass die UE über die rechte verfügt, die CRBT-Wiedergabe zu regeln.

2. Verfahren nach Anspruch 1, wobei:
die empfangene Wiedergaberegelungsanweisung durch ein Header-Feld eines Session Initiation Protocol (SIP)getragen wird; oder
die Wiedergaberegelungsanweisung durch ein Extensible-Markup-Language(XML)-Dokument getragen wird.

3. Verfahren nach Anspruch 2, wobei:
das XML-Dokument durch ein Hyper-Text-Transfer-Protocol(http)-Feld getragen wird.

4. Verfahren nach Anspruch 1, wobei: vor Empfangen, durch die CRBT-Plattform (802), der Wiedergaberegelungsanweisung, die durch die UE gesendet wird, das Verfahren ferner Folgendes umfasst:
Senden (201), durch die CRBT-Plattform (802), eines Wiedergaberegelungsmenüs an die UE;
wobei der Schritt des Empfangens (101), durch die CRBT-Plattform (802), der Wiedergaberegelungsanweisung, die durch die UE gesendet wird, Folgendes umfasst: Empfangen (202),
durch die CRBT-Plattform (802), von Auswahlinformationen über ein Element, das durch die UE aus dem Wiedergaberegelungsmenü ausgewählt wurde; und
wobei der Schritt des Sendens (102), durch die CRBT-Plattform (802), des CRBT an die UE gemäß der Wiedergaberegelungsanweisung Folgendes umfasst: Senden (203), durch die CRBT-Plattform (802), des CRBT an die UE gemäß den Auswahlinformationen.

5. Verfahren nach Anspruch 4, wobei der Schritt des Sendens (201), durch die CRBT-Plattform (802), des Wiedergaberegelungsmenüs erfolgt durch Senden, durch die CRBT-Plattform (802), des Wiedergaberegelungsmenüs, das durch ein paketvermitteltes (PS) Protokoll getragen wird; oder
Senden, durch die CRBT-Plattform (802), des Wiedergaberegelungsmenüs, das durch ein leitungsvermitteltes (CS) Protokoll getragen wird.

6. Verfahren nach Anspruch 1, wobei der Schritt des Empfangens (101), durch die CRBT-Plattform (802), der Wiedergaberegelungsanweisung erfolgt durch:
Senden, durch die UE, der Wiedergaberegelungsanweisung, die durch ein leitungsvermitteltes (CS) Protokoll getragen wird; oder
Senden, durch die UE, der Wiedergaberegelungsanweisung, die durch ein paketvermitteltes (PS) Protokoll getragen wird.

7. Verfahren nach Anspruch 5 oder 6, wobei das Tragen durch das CS-Protokoll ist:
Tragen durch Dual Tone Multi Frequency (DTMF); oder
Tragen durch Short Message Service (SMS); oder
Tragen durch Unstructured Supplementary Service Data (USSD), oder
Tragen durch eine Zusatzdienstangabenachricht;
wobei das Tragen durch das PS-Protokoll ist:
Tragen durch ein Hyper Text Transfer Protocol (HTTP); oder
Tragen durch ein Session Initiation Protocol (SIP); oder
Tragen durch ein Simple Object Access Protocol (SOAP).

8. Benutzereinrichtung (UE), zum Regeln der Wiedergabe eines angepassten Rückruftons (CRBT), umfassend:
eine Regelungsanweisung-Sendeeinheit (901), die konfiguriert ist zum Senden einer Wiedergaberegelungsanweisung an eine Plattform für angepasste Rückruftöne (CRBT) (802), wobei die Wiedergaberegelungsanweisung eine Rechtekennung trägt und die Rechtekennung angibt, ob die UE über die Rechte verfügt, die CRBT-Wiedergabe zu regeln, wobei die Rechte durch einen angerufenen Teilnehmer festleget sind, der durch die UE angerufen wird;
eine CRBT-Empfangseinheit (902), die konfiguriert ist zum Erhalten eines CRBT, der durch die CRBT-Plattform (802) gemäß der Wiedergaberegelungsanweisung gesendet wird, wenn die Kennung angibt, dass die UE über die Rechte verfügt, die CRBT-Wiedergabe zu regeln.

9. UE nach Anspruch 8, ferner umfassend:
eine Regelungsmenü-Empfangseinheit (1001), die konfiguriert ist zum Empfangen eines Wiedergaberegelungsmenüs;
eine Menüauswahleinheit (1002), die konfiguriert ist zum Auswählen eines Elements aus dem Wiedergaberegelungsmenü;
die Regelungsanweisung-Sendeeinheit (901), die ferner konfiguriert ist zum Senden von Auswahlinformationen über das ausgewählte Element an die CRBT-Plattform (802); und
die CRBT-Empfangseinheit (902), die ferner konfiguriert ist zum Empfangen des CRBT, der durch die CRBT-Plattform (802) gemäß den Auswahlinformationen gesendet wird.

10. Plattform für angepasste Rückruftöne (CRBT) (802), umfassend:
eine Regelungsanweisung-Empfangseinheit (1101), die konfiguriert ist zum Empfangen einer Wiedergaberegelungsanweisung, die durch eine Benutzereinrichtung (UE) gesendet wird, wobei die Wiedergaberegelungsanweisung, die durch die UE gesendet wird, eine Rechtekennung trägt und die Rechtekennung angibt, ob die UE über die Rechte verfügt, die CRBT-Wiedergabe zu regeln, wobei die Rechte durch einen angerufenen Teilnehmer festleget sind, der durch die UE angerufen wird;
eine CRBT-Sendeeinheit (1102), die konfiguriert ist zum Beurteilen, ob die Kennung angibt, dass die UE über die Rechte verfügt, die CRBT-Wiedergabe zu regeln, und Senden des CRBT an die UE gemäß der Wiedergaberegelungsanweisung, wenn die Kennung angibt, dass die UE über die Rechte verfügt, die CRBT-Wiedergabe zu regeln.

11. CRBT-Plattform nach Anspruch 10, ferner umfassend:
eine Regelungsmenü-Sendeeinheit (1201), die konfiguriert ist zum Senden eines Wiedergaberegelungsmenüs an die UE;
die Regelungsanweisung-Empfangseinheit (1101), die ferner konfiguriert ist zum Empfangen von Auswahlinformationen über ein Element, das durch die UE aus dem Wiedergaberegelungsmenü ausgewählt wurde; und
die CRBT-Sendeeinheit (1102), die ferner konfiguriert ist zum Senden des CRBT an die UE gemäß den Auswahlinformationen.

## Revendications

1. Procédé pour commander la reproduction d'une tonalité de retour d'appel personnalisée, CRBT, comprenant :
la réception (101), par une plate-forme CRBT (802), d'une instruction de commande de reproduction envoyée par un équipement utilisateur, UE, portant un identificateur de droits, dans lequel l'identificateur de droits indique si l'UE a des droits pour commander une reproduction de CRBT, et les droits sont établis par une partie appelée qui est appelée par l'UE ; et
le fait de juger (302), par la plate-forme CRBT (802), si l'identificateur indique que l'UE a les droits pour commander une reproduction de CRBT ; et
l'envoi (102), par la plate-forme CRBT (802), de la CRBT à l'UE en fonction de l'instruction de commande de reproduction, si l'identificateur indique que l'UE a les droits pour commander une reproduction de CRBT.

2. Procédé selon la revendication 1, dans lequel :
l'instruction de commande de reproduction est transportée par le biais d'un champ d'en-tête de protocole d'ouverture de session, SIP ; ou
l'instruction de commande de reproduction reçue est transportée par le biais d'un document de langage de balisage extensible, XML.

3. Procédé selon la revendication 2, dans lequel :
le document XML est transporté par le biais d'un champ de protocole de transfert hypertexte, HTTP.

4. Procédé selon la revendication 1, dans lequel : avant la réception, par la plate-forme CRBT (802), de l'instruction de commande de reproduction envoyée par l'UE, le procédé comprend en outre :
l'envoi (201), par la plate-forme CRBT (802), d'un menu de commande de reproduction à l'UE ;
l'étape de réception (101), par la plate-forme CRBT (802), de l'instruction de commande de reproduction envoyée par l'UE comprend : la réception (202), par la plate-forme CRBT (802), d'informations de sélection concernant un élément sélectionné par l'UE à partir du menu de commande de reproduction ; et
l'étape d'envoi (102), par la plate-forme CRBT (802), de la CRBT à l'UE en fonction de l'instruction de commande de reproduction comprend : l'envoi (203), par la plate-forme CRBT (802), de la CRBT à l'UE en fonction des informations de sélection.

5. Procédé selon la revendication 4, dans lequel l'étape d'envoi (201), par la plate-forme CRBT (802), du menu de commande de reproduction est l'envoi, par la plate-forme CRBT (802), du menu de commande de reproduction transporté par le biais d'un protocole commuté par paquets, PS ; ou
l'envoi, par la plate-forme CRBT (802), du menu de commande de reproduction transporté par le biais d'un protocole commuté par circuits, CS.

6. Procédé selon la revendication 1, dans lequel l'étape de réception (101), par la plate-forme CRBT (802), de l'instruction de commande de reproduction est :
l'envoi, par l'UE, de l'instruction de commande de reproduction transportée par le biais d'un protocole commuté par circuits, CS ; ou
l'envoi, par l'UE, de l'instruction de commande de reproduction transportée par le biais d'un protocole commuté par paquets, PS.

7. Procédé selon la revendication 5 ou 6, dans lequel le transport par le biais du protocole CS est :
le transport par le biais d'une multifréquence bitonale, DTMF ; ou
le transport par le biais d'un service de messages courts, SMS ; ou
le transport par le biais de données de service supplémentaire non structurées, USSD ; ou
le transport par le biais d'un message d'indication de service supplémentaire ;
dans lequel le transport par le biais du protocole PS est :
le transport par le biais d'un protocole de transfert hypertexte, HTTP ; ou
le transport par le biais d'un protocole d'ouverture de session, SIP ; ou
le transport par le biais d'un protocole d'accès d'objet simple, SOAP.

8. Equipement utilisateur, UE, pour commander la reproduction d'une tonalité de retour d'appel personnalisée, CRBT, comprenant :
une unité d'envoi d'instruction de commande (901) configurée pour envoyer une instruction de commande de reproduction à une plate-forme de tonalité de retour d'appel personnalisée, CRBT, (802), l'instruction de commande de reproduction transporte un identificateur de droits, et l'identificateur de droits indique si l'UE a des droits pour commander une reproduction de CRBT, dans lequel les droits sont établis par une partie appelée qui est appelée par l'UE ;
une unité de réception de CRBT (902) configurée pour obtenir une CRBT envoyée par la plate-forme CRBT (802) en fonction de l'instruction de commande de reproduction, si l'identificateur indique que l'UE a les droits pour commander une reproduction de CRBT.

9. UE selon la revendication 8, comprenant en outre :
une unité de réception de menu de commande (1 001) configurée pour recevoir un menu de commande de reproduction ;
une unité de sélection de menu (1 002) configurée pour sélectionner un élément à partir du menu de commande de reproduction ;
l'unité d'envoi d'instruction de commande (901) étant configurée en outre pour envoyer des informations de sélection concernant l'élément sélectionné à la plate-forme CRBT (802) ; et
l'unité de réception de CRBT (902) étant configurée en outre pour recevoir la CRBT envoyée par la plate-forme CRBT (802) en fonction des informations de sélection.

10. Plate-forme de tonalité de retour d'appel personnalisée, CRBT, (802) comprenant :
une unité de réception d'instruction de commande (1 101) configurée pour recevoir une instruction de commande de reproduction envoyée par un équipement utilisateur, UE,, dans lequel l'instruction de commande de reproduction envoyée par l'UE porte un identificateur de droits, dans lequel l'identificateur de droits indique si l'UE a des droits pour commander une reproduction de CRBT, dans lequel les droits sont établis par une partie appelée qui est appelée par l'UE ;
une unité d'envoi de CRBT (1 102) configurée pour juger si l'identificateur indique que l'UE a les droits pour commander une reproduction de CRBT et envoyer la CRBT à l'UE en fonction de l'instruction de commande de reproduction, si l'identificateur indique que l'UE a les droits pour commander une reproduction de CRBT.

11. Plate-forme CRBT selon la revendication 10, comprenant en outre :
une unité d'envoi de menu de commande (1 201) configurée pour envoyer un menu de commande de reproduction à l'UE ;
l'unité de réception d'instruction de commande (1 101) étant configurée en outre pour recevoir des informations de sélection concernant un élément sélectionné par l'UE à partir du menu de commande de reproduction ; et
l'unité d'envoi de CRBT (1 102) étant configurée en outre pour envoyer la CRBT à l'UE en fonction des informations de sélection.
